# EUROPEAN PATENT APPLICATION

(11) **EP 3 219 503 A1**
(43) Date of publication of application: **20.09.2017**
(21) Application number: 16160674.4
(22) Date of filing: 16.03.2016
(51) Int. Cl.: B41M 1/06, B41M 3/00, B41M 5/323, C09D 11/02, B41M 3/14, B41M 5/333, B41M 5/337, C09D 11/03

(54) **PROCESS FOR MANUFACTURING A LASER MARKABLE PACKAGING**

(71) Applicant: AGFA-GEVAERT, 2640 Mortsel (BE)
(72) Inventor: Loccufier, Johan, 2640 Mortsel (BE); Goethals, Fabienne, 2640 Mortsel (BE)
(74) Representative: Viaene, Kris

(57) **Abstract**

The invention provides an offset printing process for manufacturing a laser markable packaging characterized in that a laser markable offset ink, a laser markable varnish or a laser markable dispersion-lacquer is used in the process to provide a laser markable image or area on the packaging. The invention also provides a laser markable offset ink, offset varnish or offset dispersion-lacquer comprising a leuco dye and a metal free optothermal converting agent, which may be used in the offset printing process.

## Description

### Technical field of the Invention

The present invention relates to a process for manufacturing a laser markable packaging, in particular to an offset printing process for manufacturing such a packaging. The invention also relates to laser markable offset inks, varnishes or dispersion-lacquers used in the offset printing process.

### Background art for the invention

Serialization and authentication becomes more and more important in the manufacturing of packaging, especially in for example pharmaceutical packaging and packaging of luxury goods.

Serialization and authentication refers to the assignment and placement of unique markings on a primary package. Such unique markings include human-readable letter/number codes, machine readable codes or RF-ID tags. These unique codes are placed on each package when they are packaged using variable data printers or pre-printed labels. These unique codes are uploaded to a database and coupled to information such as batch number, production date, or even instructions how to use the product. That information can be assessed by various parties after the packaged product is shipped and sold by entering the code, for example by scanning machine readable codes with a smart phone. When using a real-time database the information provided to customers can be updated after shipping the packaging to that customer. Also, by consulting the databank, information of the customer, for example his location, may be entered into that databank and provide the supplier with valuable marketing information.

In packaging there is also a growing need for anti-counterfeiting measures, for example packaging of luxury goods. Several anti-counterfeiting strategies may be used in packaging, for example micro QR codes, which can not be easily copied by potential counterfeiters.

Customisation or personalisation of packaging is also a trend becoming more and more important, for example due to increased on-line shopping. The customer has the possibility to customise the packaging or the supplier may adapt the packaging taking for example taking into account an event, such as for example the world cup football.

The variable data mentioned above may be provided to a packaging by a printing technique, such as inkjet printing, or by so-called laser marking.

With inkjet printing multicolour information may printed while with laser marking typically black and white information is added on the packaging.

An advantage of laser marking is a high resolution of the marked image, the possibility to mark uneven or 3D surfaces, speed, sub-surface marking and the absence of dust formation.

Offset printing is a preferred technology for high quality packaging, such as for example folding carton.

Introducing laser markable elements to offset printed packaging now requires an additional label provided with a laser markable coating or an additional printing step, for example a flexographic printing step.

Using laser markable labels introduces extra complexity into the manufacturing process of the packaging, for example the label has to be applied on the packaging, the label has to be pre-coated with a laser markable coating, the label has to be stored, etc. Moreover, using labels also holds risks for falsification as the label can be removed or replaced from the original packaging.

Flexographic printing has a limited image quality and is especially suited for direct printing e.g. on corrugated carton and flexible packaging. It is not meeting the high quality demands of packaging designs for luxury goods.

Water based laser markable coating solutions are available from FujiFilm under the trade name CodeStream™ and are disclosed in for example WO2006/052842, WO2008/030428 and WO2014/124052. Other Laser markable coatings are commercially available from Datalase and disclosed in for example WO2002/074548. Laser marking of these coatings is carried out with a carbon dioxide (CO₂) laser.

A disadvantage of using a CO₂ laser is its rather long emission wavelength (10.6 µm) limiting the resolution of the marked image that can obtained.

WO2005/068207 discloses a laser markable coating, which can be laser marked using a Near Infrared (NIR) laser. The coating comprises heavy metal based optothermal converting agents such as Copper salts.

In other laser markable inks disclosed in for example WO2007/141522 and WO2015/015200 inorganic metal oxides, such as Indium Tin Oxide (ITO) or Tungsten Bronze, are used as infrared absorbing pigment.

Heavy metal containing optothermal converting agents are however to be avoided from an ecological and toxicological point of view, especially in food and pharmaceutical packaging applications.

Metal (oxide) containing optothermal converting agents typically have a broad absorption spectrum, therefore excluding the possibility of integrating multiple laser markable features that can be selectively addressed by different infrared lasers, which would be beneficial for further maximizing security and authentication features into luxury and pharmaceutical packaging.

To further develop "track and trace" and anti-counterfeiting strategies in especially high quality packaging, there remains a need for a technology, allowing to the integration of multiple high resolution machine readable elements hidden in the packaging.

### Summary of the invention

It is an object of the invention to provide a process for manufacturing high quality packaging wherein high resolution serialization and/or authentication information can be provided on the packaging.

This object has been realized by the offset printing process according to claim 1.

It is another object to provide laser markable offset inks, varnishes or dispersion-lacquer that can be used in the offset printing process.

Further advantages and embodiments of the present invention will become apparent from the following description.

### Brief description of the drawings

Figure 1 shows a schematic representation of an offset printing press.
Figure 2 shows a schematic representation of a printing unit or tower of an offset printing process.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

An offset ink is a coloured ink designed for offset printing.

An offset varnish is a colourless ink designed for offset printing.

A dispersion-lacquer is an aqueous lacquer used in an in-line coating unit of an offset printing press, for example for embellishment or (UV) protection purposes.

### Offset printing process for manufacturing a laser markable packaging

The printing process for manufacturing a laser markable packaging according to a preferred embodiment of the invention is an offset printing process wherein a laser markable offset ink, a laser markable offset varnish or a laser markable dispersion-lacquer is used to provide a laser markable image or area on the packaging.

An offset ink referred to herein is a coloured offset ink while an offset varnish referred to herein is a colourless offset ink, i.e. basically an offset ink without a pigment, as described below.

A dispersion-lacquer is an aqueous lacquer used in an in-line coating unit of an offset printing press, for example for embellishment or (UV) protection purposes.

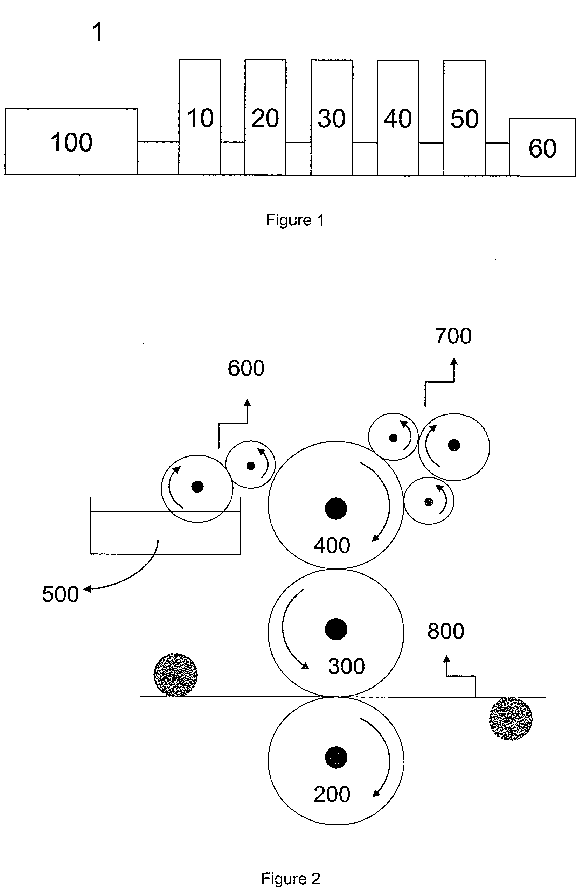

The offset ink or varnish may be applied in a printing unit or tower (10, 20, 30, 40, 50) of an offset printing press described below, preferably after applying the CMYK colours. For example, referring to Figure 1, the CMYK colours may be applied respectively in the towers 10, 20, 30 and 40, while the laser markable offset ink or varnish may be applied in tower 50).

When a laser markable offset ink is used, for example to print a cyan image or area, a colour different from cyan may be laser marked inside the cyan image or area.

When a colourless offset varnish is used to print a colourless image or area, a coloured image may be laser marked inside the colourless image or area.

When the packaging itself is not white it is preferred to first print a white area or solid, preferably using a white offset ink, followed by printing the colourless laser markable solid on top of the white solid. The white background ensures high intensity, more vivid colours in the laser marked image.

A white offset ink typically has TiO₂ as pigment.

Two, three, or more different laser markable offset inks or varnishes may be used in the offset printing process. Each laser markable offset ink or varnish may then be applied in a separate printing unit.

The two, three or more laser markable offset inks or varnishes may be printed next to each other or on top of each other.

When multiple laser markable inks or varnishes, each containing a different leuco dye, are printed next to each other, they can be individually addressed using the same laser thereby forming different colours next to each other.

Printing laser markable pixels next to each other followed by imagewise addressing them with a laser may result in a full colour laser marked image, as disclosed in the unpublished EP-A 15201633.3 (filed 21-12-2015).

When multiple laser markable inks or varnishes, each containing a different leuco dye and a different optothermal converting agent, are printed on top of each other, they can be individually addressed using different lasers of which the emission wavelengths matches the absorption maxima of the optothermal converting agents.

When multiple laser markable inks or varnishes are used on top of each other, for example inks resulting in Cyan, Magenta and Yellow markings, it may be possible to obtain a full coloured image.

When using two or more laser markable inks or varnishes to form a colour image, the inks or varnishes preferably comprise an infrared absorbing dye as optothermal converting agent. An advantage of such infrared dyes compared to infrared absorbing pigments is their narrow absorption making a selective addressability of the compositions possible.

When two or more laser markable inks or varnishes are used, the absorption maxima of their infrared dyes differ by at least 80 nm, more preferably by at least 100 nm, most preferably by at least 120 nm.

According to a preferred embodiment, a first laser markable offset ink or varnish contains a first infrared dye IR-1 having an absorption maximum in the infrared region λₘₐₓ(IR-1), a second laser markable offset ink or varnish contains a second infrared dye IR-2 having an absorption maximum in the infrared region λₘₐₓ(IR-2), and a third laser markable offset ink or varnish contains a third infrared dye IR-3 having an absorption maximum in the infrared region λₘₐₓ(IR-3), wherein the conditions a) and b) are fulfilled:
a) λₘₐₓ(IR-1) > λₘₐₓ(IR-2) > λₘₐₓ(IR-3); and
b) λₘₐₓ(IR-1) > 1100 nm and λₘₐₓ(IR-3) < 1000 nm.

In a particularly preferred embodiment the condition c) is also fulfilled:
c) λ_{maX}(IR-2) differs by at least 60 nm from λₘₐₓ(IR-1) and λₘₐₓ(IR-3).

In another preferred embodiment λ_{maX}(IR-3) ≥ 830 nm and λₘₐₓ(IR-1) ≥ 1125 nm.

According to another embodiment, a single laser markable offset ink or varnish is capable of selectively forming at least two different colours upon exposure with, for example two or more different lasers, each having a different emission wavelength. Such an offset ink or varnish preferably comprises a composition as disclosed in the unpublished PCT/EP2015/061007 (filed 19-05-2015).

A laser markable dispersion-lacquer is preferably provided in an in-line coating or lacquer unit (Figure 1, 60).

Two, three or more different laser markable dispersion-lacquers may be provided, in the same way as described above for the laser markable offset inks.

A combination of one or more laser markable offset inks and one or more laser markable varnishes, a combination of one or more laser markable offset inks and one or more laser markable dispersion-lacquers, or a combination of one or more laser markable offset varnishes and one or more laser markable dispersion-lacquer may also be used in the offset printing process for the manufacture of a laser markable packaging.

When the laser markable ink is used for the manufacture of food packaging or pharmaceutical applications, the laser markable ink is preferably a so-called "low migration" laser markable ink.

The term "low migration" packaging is commonly used to designate materials used in the packaging structure whose chemicals will not migrate, or move, from the packaging into the product.

Such a low migration laser markable offset ink or varnish, or dispersion-lacquer, may comprise a diffusion hindered leuco dye, a diffusion hindered developing agent or developing agent precursor or a diffusion hindered infrared dye as optothermal converting agent.

Preferred diffusion hindered leuco dyes, developing agents, developing agent precursors and infrared dyes are disclosed in the unpublished EP-A 15196923.5 (filed 30-11-2015).

In a preferred embodiment the printed laser markable images are covered with a protective layer. Such a protective layer may improve the stability of the marked images towards daylight and heat. Therefore, the protective layer preferably contains UV absorbing compounds and acid scavengers as described below.

Such a protective layer may be provided in an in-line coating unit or lacquer unit (Figure 1, 60) typically at the end of the offset printing process.

To improve the adhesion of the laser markable offset inks, offset varnishes and dispersion-lacquers, a primer may be applied on the substrate.

When a laser markable dispersion-lacquer is applied in an in-line coating unit, the primer may also be applied in an in-line coating unit.

### Offset Printing Press

A printing press is a complex piece of high-precision industrial equipment that is designed to produce printed material at a high rate of speed and low cost per page. Printing presses are commercially available which use several different types of printing technologies, such as offset lithography.

These presses are commonly designed in either sheet-fed configurations, which print on individual sheets of the substrate, or web-fed configurations, which print on long webs of the substrate, supplied on large reels.

An offset printing press (1) has a separate printing unit (10, 20, 30, 40, 50), often referred to as tower, for each colour of ink. Some presses may have as many as 12 towers. Normally black plus the three subtractive primary colours (cyan, magenta, and yellow) are the 4 main colours printed. Other inks added to these four main colours are typically spot colours, which are highly saturated colours outside the colour gamut which can be achieved with the subtractive primaries. The latter are commonly employed as logo colours, or they may be colours which are being used for some striking artistic effect.

Each printing tower has three main cylinders - the plate cylinder (400), blanket cylinder (300), and impression cylinder (200). Each of these cylinders is designed to have a surface which is slightly larger in area than the size of sheets which are printed by that particular press. The blanket cylinder is in between the plate and impression cylinders, and its surface touches the surface of the other two cylinders. The three cylinders are rotated at the same surface velocity, so that their surfaces contact each other without sliding. As explained below, the ink image is formed first on the plate, then transferred to the blanket, and finally transferred to the substrate (which is held on the surface of the impression cylinder).

There is one lithographic plate per colour and these plates form the image. The plates operate on the principle that oil and water do not mix. Some other printing press technologies, such as flexography, use printing plates with raised areas which hold the ink, similar to a stamp pad. There are also some other printing press technologies, such as gravure, which hold the ink in engraved recesses on the equivalent of the "plate cylinder". However, lithography uses plates which are flat to within 1 µm. The inked areas in the image are neither raised nor recessed by any height which is of any significance to this printing process. The plates themselves are most commonly flat pieces of anodized aluminium with a thin (about 1 micrometer thick) hydrophobic layer on their surface. The polymer has the property that it is readily wetted by the oil-based printing ink, but not wetted by water. On the other hand, the anodized aluminium itself is readily wetted by water, but is not by the ink. So, essentially, the hydrophobic layer attracts ink and the aluminium attracts water.

Before the press is ready to start printing, an image is formed on the surface of each plate by selectively removing portions of the hydrophobic layer.

Then the plates are wrapped around the plate cylinders (400) and mechanically clamped in place. A type of offset press called a direct imaging (DI) press, available since the mid 1990s, forms images on plates in situ on the plate cylinders in the press, using laser scanning systems integrated in the press. This is less common than imaging the plates outside of the press on a computer-to-plate machine.

Once the press starts printing, rollers (600) apply a colourless water-based solution (500, called dampening solution or fountain solution) to each plate, and this solution wets the areas where the hydrophobic layer has been removed. After the fountain solution is applied, other rollers (700) apply printing ink to the plate, and this ink coats only the portions of the plate that still are covered by the hydrophobic layer.

The inked printing plate presses up against the second main cylinder, the blanket cylinder (300). A soft rubbery sheet, about 2 mm thick (called an offset blanket), covers the surface of this cylinder. This blanket is a distinctive feature of offset lithography - the ink in the image transfers first from the plate to the blanket and then next from the blanket to the substrate. The advantage of the blanket is that it is soft and deformable, which enables it to conform to the surface contours of the paper or other material and transfer a thin layer of ink (typically 1 µm of ink thickness) to the substrate both efficiently and uniformly, in spite of the roughness of the surface of the substrate. The blanket is held in place on the blanket cylinder by clamps, similar to the manner that the plate is held by clamps onto the plate cylinder.

As the plate rotates into contact with the blanket and then separates from it, about half of the ink on the plate transfers to the blanket. This ink image travels on the surface of the blanket as the blanket cylinder rotates and then comes into contact with the substrate. As the blanket separates from the substrate, about half of the ink transfers onto the substrate. Printing presses are designed to print the same image page after page on a large number of pages, so it is not a problem that only half of the ink transfers from the plate to the blanket, and then half from the blanket to the substrate. More ink is added to the image areas on the plate during each revolution, as the plate passes under the inking rollers. And during each revolution, half of the ink is transferred to the blanket. After some number of initial "startup" rotations of the cylinders, the ink flow off of the plate becomes equalized to the ink flow onto the plate, and similarly the ink flow off of the blanket (onto the substrate) becomes equalized to the ink from onto the blanket.

The substrate which passes through a sheetfed offset press is held by grippers. There are many sets of grippers in the press, and the sheet is relayed from one set of grippers to the next as it travels through the press.

Offset presses use specially designed inks which are very viscous (with a viscosity of about 100 Pascal). A complex set of rollers feeds the ink to each plate cylinder - typically about 20 individual rollers for the ink supply to each plate. This set of rollers splits the ink film numerous times, creating a thinner and thinner ink layer as the ink moves from the ink supply toward the plate cylinder. At the very beginning of this set of rollers is a set of ink keys: mechanical adjustments which control the thickness of ink flowing out of the ink supply. Each key controls the volume of ink which is printed on about 2 cm or so of the width across the printed page. These keys are adjusted so the volume of ink flowing for each 2 cm or so of width across the page is matched to the image area on that printing plate (for that colour) in that same portion of the page.

To start a print run, the plates are first imaged and clamped onto the plate cylinders on the press, one plate for every colour of ink.

Next the ink keys are adjusted across the width of each ink supply system. In some recent model presses, these are motorized as well, and the settings are taken directly from the image density across of the width of each plate (which can be measured using a scanner, or taken directly from the computer-to-plate file). Then the press is started running at a low speed. The initial sheets which come off of the press are carefully checked by the press operator for registration (i.e. alignment) of each colour plane, using printed crosses and other alignment marks. The operator can adjust the position of each plate in both dimensions as needed with precision adjustment gears while the press is running at low speed. The operator also waits until enough sheets have been printed to achieve ink/water balance and to achieve steady-state ink flow on each of the sets of inking rollers, and then checks the optical density of test patches to verify that the proper amount of ink is being printed. All in all, installing and adjusting a new set of plates takes several minutes to perhaps a couple of tens of minutes, depending of the degree of automation of the particular press and the skill of the operator.

Once the registration and colour are good, the operator increases the speed of the press to its full production speed. Modern offset presses operate at speeds up to 18 000 sheets per hour, or 300 sheets per minute. Because of the large sheet size (about 700 mm x 1000 mm for a "full size" sheet fed press), each sheet will commonly have 8 pages of printed material on it, and if it is a perfecting press, it prints both sides of the page in a single pass (i.e. the equivalent of 16 pages of information). So the press speed is equivalent to (300 sheets/minute) x (16 pages / sheet) = 4800 pages / min. However, each time a new set of pages is needed, new plates must be mounted and the press must be adjusted, which stops the production for up to a couple of tens of minutes. So an offset press is best suited to long print runs in which many thousand of identical copies of the same printed material are needed. For shorter print runs, digital printing technologies are preferable.

Typically, an Offset printing press has an in-line "coating unit" (200). Such a coating unit is also referred to as lacquer unit. In this unit a "coating" is applied on the printed image.

Coatings have evolved from a simple protective layer of gloss to an attractive design medium for accentuating spots or solids. An advantage of using a "coating unit" or "lacquer unit" instead of using an additional offset printing unit to apply for example a protective layer or accentuating spot is the possibility to apply thicker layers (with offset only very thin layer can be applied, see above).

The creative use of coatings gives rise to products whose visual and tactile properties make them stand out from the pack. Print providers can exploit coating as a value-added service to differentiate themselves from their competitors. Sumptuous matt/gloss effects can be created on hybrid or two-coater presses, metallic and lustre coatings impart unusual optical effects, scented coatings appeal to our sense of smell, scratch-off coatings introduce an element of surprise, blister and adhesive coatings give packaging rigidity, UV coatings enhance the inherent properties of folding cartons, plastic film and cards...

For many applications, inline coating has long since become established as a high-quality, cost-effective alternative to offline coating in special coaters or screen-printing machines. More than half the medium- and large-format sheetfed presses shipped today are configured with at least one coater.

The lacquer or coating can be applied over the entire surface of the printed paper or other material (all over) or locally (spot).

The in-line coaters are generally roll coaters or anilox coaters. An advantage of using anilox coaters is a better control of the coating volume.

The coating solution or lacquer is preferably water based. Such water based lacquers are also referred to as dispersion lacquers.

### Offset ink or varnish

Offset printing uses inks that, compared to other printing methods, are highly viscous. Typical inks have a dynamic viscosity of 40-100 Pa·s and may therefore be considered paste inks.

There are many types of paste inks available for utilization in offset lithographic printing and each have their own advantages and disadvantages. These include heat-set inks, cold-set inks, ultraviolet (UV) curable inks, and electron beam (EB) curable ink.

Heat-set inks are most widely used and are "set" by applying heat and then rapid cooling to catalyze the curing process. They are used in magazines, catalogues, and inserts. Cold-set inks are set simply by absorption into non-coated stocks and are generally used for newspapers and books but are also found in insert printing and are the most economical option. UV and EB curable inks are the highest-quality offset inks and are set by application of respectively UV and EB radiation. They require specialized equipment such as inter-station curing lamps, and are usually the most expensive type of offset inks.

The most widely used inks of packaging are cold-set inks that dry by oxidation and UV curable inks.

In general, offset inks comprise a variety of components or ingredients including a varnish or vehicle component, pigments, solvents or diluents and various additives.

The pigments, solvents or diluents and additives provide the ink composition with certain desirable characteristics such as colour, drying speed, tack, viscosity, etc. These may be considered optional, depending upon the particular characteristics desired.

Pigments or colouring agents may include organic and inorganic pigments, dyes and other known colorants. The pigments are preferably organic pigments. Typical pigments used are Phthalocyanine blue for cyan, Lithol Rubine for magenta, and Diarylide yellow for yellow.

Solvents or diluents are principally used to control the viscosity or to improve the compatibility of the other components of the ink.

Additives and other auxiliary components may include, for example, waxes, greases, plasticizers, stabilizers, drying agents, supplemental drying agents, thickeners, fillers, inhibitors and others known to the art.

The major component of an offset ink is commonly referred to as an offset ink varnish or vehicle. An offset ink varnish or vehicle comprises two principal components: a resin component and an oil or diluent component. As used herein, the term resin is used in its broadest sense to include all natural and synthetic resins capable of functioning as a component in a printing ink.

Offset ink varnishes may be divided into two major classes depending on the system of curing or drying of the inks.

The first system is an oleoresinous system, which is generally used to produce quick-set, heat-set, and various other drying inks which set or dry by oxidation, absorption of the oil into the substrate, or by solvent evaporation.

The second system is known as an acrylic system, which set by UV, EB or other radiation curing techniques.

In an oleoresinous system, the varnish is comprised of resins and oils or solvents while in radiation curable inks, these are replaced by polymerizable components such as acrylate functional oligomers and monomers known in the art.

In a radiation curable system, the monomers are commonly referred to and function as diluents.

The oil or diluent component of offset inks or offset ink varnishes commonly used include vegetable and other oils such as linseed, soybean or soya, castor, dehydrated castor, corn, tung, carnuba and otticita oils. Certain petroleum distillates or mineral oils can also be used in combination with or in lieu of the vegetable oils.

Fatty acids can also be used. Examples of suitable fatty acids include oleic, linoleic or tall oil fatty acids.

The diluent component of offset inks or offset ink varnishes functions principally to dissolve and act as a carrier for the resin component. Thus, a principal requirement of the oil component is that it be compatible with, and therefore able to dissolve or be miscible with, the resin component.

Various oils and oil formulations which are usable in ink compositions and in particular offset inks are disclosed for example in "The Printing Ink Manual", Fourth Edition (1988) edited by R. H. Leach and published by Van Nostrand Reinhold.

Preferably the oil or diluent component of the offset ink varnish comprises 10 to 90 wt%, most preferably 30 to 70 wt%, relative to the total weight of the varnish.

The resin component of an offset ink or offset ink varnish functions, among others, as a film former to bind the varnish and pigment together and, when the ink dries, to bind the varnish and pigment to the receiving substrate. The resin component also contributes to the properties of hardness, gloss, adhesion and flexibility of an ink and must be compatible with the oil or diluent component of the varnish.

Typical resins are disclosed in "The Printing Ink Manual" referred to above.

### Laser markable Offset ink or varnish

A laser markable offset ink or varnish preferably comprises, in addition to the typical ingredients of offset inks or varnishes described above, a leuco dye and an opthothermal converting agent.

Preferred leuco dyes and optothermal converting agents are described below.

The laser markable offset ink or varnish may further comprise other ingredients to optimize the laser marking properties, such as developing agent precursors, UV absorbers, acid scavengers, radical scavengers, etc.

Preferred developing agent precursors, UV absorbers, and acid scavenger are described below.

### Offset Dispersion-lacque

Today, aqueous, UV curable and solvent based coatings are applied in an in-line coating unit of a printing press.

Preferred coatings are however aqueous coatings, often referred to as dispersion-lacquers.

Aqueous dispersion-lacquers typically comprise acrylate polymer particles dispersed in water, film forming substances, anti-foam agents, surfactants, etc.

The dispersion-lacquers may be applied by any coating technique, preferably using anilox coaters.

After applying the dispersion-lacquers, the water has to be removed in a drying step for example using IR radiation, a vapour extractor, a hot-air knife, or combination thereof.

### Laser markable Offset Dispersion-lacquer

A laser markable offset dispersion-lacquer is typically an aqueous dispersion.

The same leuco dyes and optothermal converting agents as described for a laser markable offset ink or varnish may be used.

However, it is preferred to use water soluble or dispersible leuco dyes or optothermal converting agents.

In a preferred embodiment, the leuco dye and/or optothermal converting agents are encapsulated.

Leuco dyes and/or optothermal converting agents that are not or slightly soluble or dispersible in an aqueous medium may be introduced in the aqueous dispersion lacquer by encapsulating them.

Also, the stability of the laser marking system may increase when the leuco dyes and/or optothermal converting agents are encapsulated.

When the leuco dyes are encapsulated, developing agents as described below may be used. However, in view of the stability of the laser markable system it is preferred to use a developing agent precursor.

The laser markable dispersion-lacquer preferably comprises compositions containing encapsulated leuco dyes disclosed in EP-A 15168086.5 (filed 19-05-2015) and PCT/EP2015/061007 (filed19-05-2015).

### Fountain solution

The dampening system on an offset printing press applies a water-based dampening or fountain solution to the printing plate before it is inked. Fountain solutions keep the non-image areas of a plate moistened so that they will not accept ink, and are applied to the entire plate.

The non-image areas of the plate are hydrophilic while the image areas are hydrophobic. Typically a desensitizing film is applied to the imaged plate to preserve the hydrophilic nature of the non-image areas. Such a desensitizing film on the non-image areas however wears off gradually as the plate continues to run on press, so the chemicals in the fountain solution replenish the desensitizing film.

Ink, plate, press speed, paper, temperature, and relative humidity are the principal factors that influence the need for various dampening solutions.

Most dampening or fountain solutions are acidic, typically having a pH of 4 to 5.5.

In general, a fountain solution comprises the following ingredients:
- Water;
- Acids or bases, depending to a large extent on the ink being used. Acids used include phosphoric acid, citric acid, and lactic acid;
- Gum, either natural (gum arabic) or synthetic, to desensitize non-image areas;
- Corrosion inhibitors, to prevent the dampening solution from reacting with the aluminium plate for example Magnesium nitrate;
- Wetting agents, such as isopropanol or an alcohol substitute, which decrease the surface tension of the water-based solutions;
- Drying stimulator, a substance, such as cobalt chloride;
- Fungicide, to prevent the formation of mildew and the growth of fungus and bacteria in the dampening system;
- Antifoaming agent, to prevent the build-up of foam. Foam can interfere with the even distribution of dampening solution on the dampening rollers.

Fountain solutions are usually sold as concentrated solutions that are diluted with water to the proper concentration.

### Ink-water balance

Ink and water balance is an extremely important part of offset printing. If ink and water are not properly balanced, the press operator may end up with many different problems affecting the quality of the finished product, such as emulsification (the water overpowering and mixing with the ink). This leads to scumming, catchup, trapping problems, ink density issues and in extreme cases the ink not properly drying on the paper; resulting in the job being unfit for delivery to the client. With the proper balance, the job will have the correct ink density and should need little further adjustment except for minor ones. An example would be when the press heats up during normal operation, thus evaporating water at a faster rate. In this case the machinist will gradually increase the water as the press heats up to compensate for the increased evaporation of water. Printing machinists generally try to use as little water as possible to avoid these problems.

### Laser markable packaging

The process of manufacturing a laser markable packaging is preferably used for folded cardboard or corrugated cardboard laminated with paper.

Such packaging is preferably used for cosmetics, pharmaceuticals, food or electronics.

The process of manufacturing a laser markable packaging is preferably used for high quality packaging of luxury goods, such as for example premium brand cosmetics.

Such premium brand cosmetics are prone to counterfeiting and therefore it is important that the packaging of these products includes security features that are not easily copied.

Laser marking may be used to introduce such security features onto the packaging.

To enhance the luxury feeling to the packaging, the primary packaging is often wrapped in transparent or opaque cellophane.

An advantage of laser marking, compared with for example inkjet printing, is the ability to apply the laser marked information on the primary packaging through the cellophane.

According to another embodiment, the process of manufacturing a laser markable packaging is used for pharmaceutical packaging.

For Pharmaceutical packaging, track and trace requirements become more and more demanding to comply with the ever evolving legislation.

### Track and Trace

The advantages are especially obtained for those types of packaging where traceability and serialization come into play.

Traceability is a major concern, and often a requirement for the medical and pharmaceutical community. In the event of a product recall, public safety and health are at risk. Manufacturers need the ability to quickly and positively identify and isolate all suspect products in the supply chain. Traceability is important for a packaging selected from the group consisting of food packaging, drink packaging, cosmetical packaging and medical packaging,

The basics of serialization (lot codes, batch codes, item numbers, time and date stamp) enable traceability from origination at the point of manufacture to the end of the supply chain. This data can be in the form of human readable text or through the use of coding, such as bar codes and QR codes, which aids in the process of authenticating the data electronically. Serialization is important for consumer packaged goods, such as electronic components, toys, computers and other electronic consumer goods.

The current invention can also be used to check the authenticity of the product bought by a customer. Currently, this is a great concern for pharmaceuticals, since many fake or inferior products circulate via the internet.

For example a high resolution QR code may be laser marked on the packaging, which can be scanned by a smart phone using an application downloadable form the Apple™ or Google™ webstore for verifying the authenticity.

### Leuco Dye

A leuco dye is a substantially colourless compound, which may form a coloured dye upon inter- or intra-molecular reaction. The inter- or intra-molecular reaction is triggered by heat formed during exposure with an IR laser.

Any leuco dye may be used as long as the leuco dye may be incorporated in the offset ink or varnish. Examples of leuco dyes are disclosed in WO2015/165854, paragraph [069] to [093].

As offset inks and varnishes are typical apolar solutions, preferred leuco dyes are soluble or dispersable in apolar media.

In a preferred embodiment, at least one of the auxochromic groups of the leuco dye is functionalized with an optionally substituted branched aliphatic group. An auxochromic group is a group of atoms attached to a chromophore, which modified the ability of that chromophore to absorb light (absorption wavelength and/or absorption density).

In a particularly preferred embodiment the optionally substituted branched aliphatic group has at least five carbon atoms, more preferably at least eight carbon atoms and most preferably at least ten carbon atoms.

Particularly preferred Leuco dyes comprising a structural element according to general Formulae I or II, 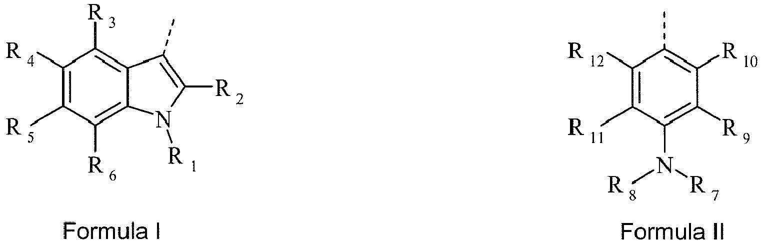 wherein
R₁ represents an optionally substituted branched alkyl group,
R₂ represents a group selected from the group consisting of an alkyl group and an aryl group,
R₃ to R₆ are independently selected from the group consisting of hydrogen, an optionally substituted alkyl group, an optionally substituted alkenyl group, an optionally substituted alkynyl group, an optionally substituted alkaryl group, an optionally substituted aralkyl group, an optionally substituted aryl or heteroaryl group, a halogen, an amine, an amide, an ester, an optionally substituted alkoxy group, an optionally substituted aryloxy group, an optionally substituted thioalkoxy group and an optionally substituted thioaryloxy group,
R₇ and R₈ represent an optionally substituted alkyl group, an optionally substituted alkenyl group, an optionally substituted alkynyl group, an optionally substituted aralkyl group, an optionally substituted alkaryl group and an optionally substituted aryl or heteroaryl group, with the proviso that at least one of R₇ and R₈ represents an optionally substituted branched alkyl group,
R₉ to R₁₂ are independently selected from the group consisting of hydrogen, an optionally substituted alkyl group, an optionally substituted alkenyl group, an optionally substituted alkynyl group, an optionally substituted alkaryl group, an optionally substituted aralkyl group, an optionally substituted aryl or heteroaryl group, a halogen, an amine, an amide, an ester, an optionally substituted alkoxy group, an optionally substituted aryloxy group, an optionally substituted thioalkoxy group and an optionally substituted thioaryloxy group, and wherein the dashed line represents the coupling position to the rest of the chromophore.

In a particularly preferred embodiment R₁ has at least five carbon atoms, more preferably at least eight carbon atoms and most preferably at least ten carbon atoms.

In a particularly preferred embodiment R₁ is coupled to the nitrogen of the indole ring via a secondary carbon atom.

In a further preferred embodiment R₇ and R₈ represent an optionally substituted alkyl group with the proviso that at least one of R₇ and R₈ represents an optionally substituted branched alkyl group, preferably comprising at least five carbon atoms, more preferably at least eight carbon atoms and most preferably at least ten carbon atoms.

In a particularly preferred embodiment at least one of R₇ and R₈ is bonded to the nitrogen atom of the aniline functional group via a secondary carbon atom.

Particularly preferred leuco dyes functionalized with optionally substituted branched alkyl groups on the auxochromic group are selected from leuco dyes according to Formulae III to VIII. 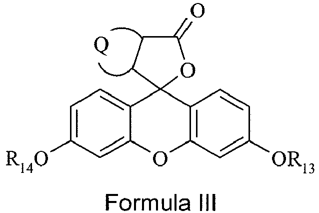 wherein R₁₃ and R₁₄ are independently selected from the group consisting of an optionally substituted alkyl group or branched alkyl group with the proviso that at least one of R₁₃ and R₁₄ represents an optionally substituted branched alkyl group and Q represents the necessary atoms to form a six membered optionally substituted aromatic or heteroaromatic ring; 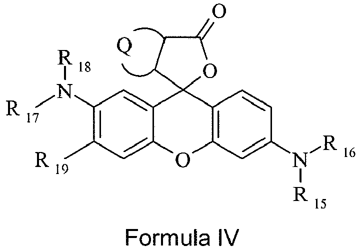 wherein R₁₅, R₁₆, R₁₇ and R₁₈ are independently selected from the group consisting of an optionally substituted alkyl group or branched alkyl group with the proviso that at least one of R₁₅, R₁₆, R₁₇ and R₁₈ represents an optionally substituted branched alkyl group, R₁₉ is selected from the group consisting of a hydrogen and an optionally substituted alkyl group and Q represents the necessary atoms to form a six membered optionally substituted aromatic or heteroaromatic ring; 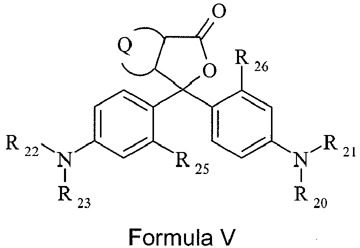 wherein R₂₀, R₂₁, R₂₂ and R₂₃ are independently selected from the group consisting of an optionally substituted alkyl group or branched alkyl group with the proviso that at least one of R₂₀, R₂₁, R₂₂ and R₂₃ represents an optionally substituted branched alkyl group, R₂₅ and R₂₆ are selected from the group consisting of a hydrogen, an optionally substituted alkyl group and an optionally substituted alkoxy group and Q represents the necessary atoms to form a six membered optionally substituted aromatic or heteroaromatic ring; 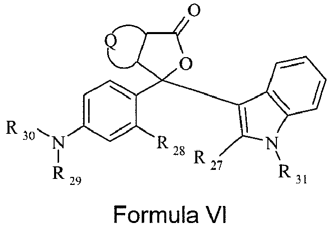 wherein R₂₉, R₃₀ and R₃₁ are independently selected from the group consisting of an optionally substituted alkyl group or branched alkyl group with the proviso that at least one of R₂₉, R₃₀ and R₃₁ represents an optionally substituted branched alkyl group, R₂₇ represents an optionally substituted alkyl group or an optionally substituted aryl group, R₂₈ is selected from the group consisting of a hydrogen, an optionally substituted alkyl group and an optionally substituted alkoxy group and Q represents the necessary atoms to form a six membered optionally substituted aromatic or heteroaromatic ring; 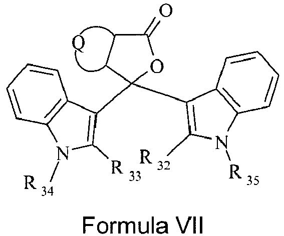 wherein R₃₄ and R₃₅ are independently selected from the group consisting of an optionally substituted alkyl group or branched alkyl group with the proviso that at least one of R₃₄ and R₃₅ represents an optionally substituted branched alkyl group, R₃₂ and R₃₃ are an optionally substituted alkyl group or an optionally substituted aryl group and Q represents the necessary atoms to form a six membered optionally substituted aromatic or heteroaromatic ring; 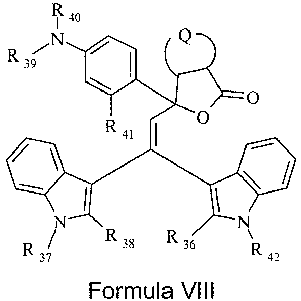 wherein R₃₇, R₃₉, R₄₀ and R₄₂ are independently selected from the group consisting of an optionally substituted alkyl group or branched alkyl group with the proviso that at least one of R₃₇, R₃₉, R₄o and R₄₂ represents an optionally substituted branched alkyl group, R₃₆ and R₃₈ are independently selected from the group consisting of an optionally substituted alkyl group or an optionally substituted aryl group, R₄₁ is independently selected from the group consisting of a hydrogen, an optionally substituted alkyl group and an optionally substituted alkoxy group, and Q represents the necessary atoms to form a six membered optionally substituted aromatic or heteroaromatic ring.

Typical examples of preferred leuco dyes are given below without being limited thereto.

**Table 1**

| | |
|---|---|
| 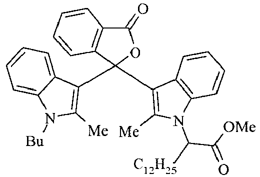 | Leuco-1 |
| 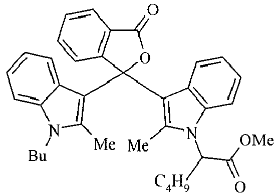 | Leuco-2 |
| 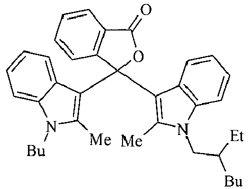 | Leuco-3 |
| 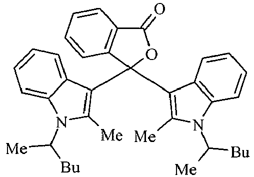 | Leuco-4 |
| 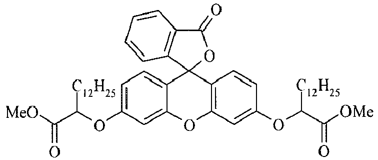 | Leuco-5 |
| 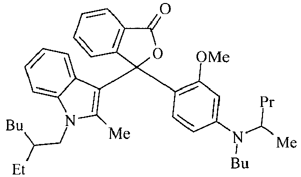 | Leuco-6 |
| 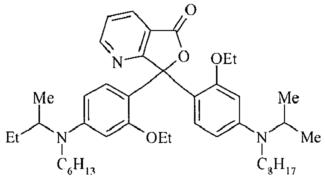 | Leuco-7 |
| 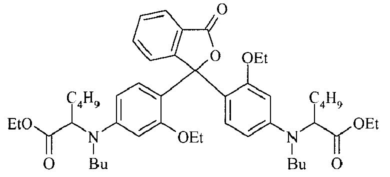 | Leuco-8 |
| 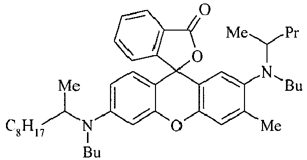 | Leuco-9 |
| 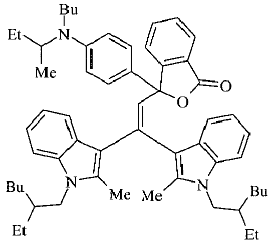 | Leuco-10 |

The amount of leuco dyes in an offset ink or offset ink varnish is preferably between 0.5 and 20 wt%, more preferably between 1 and 15 wt%, most preferably between 2.5 and 10 wt%, relative to the total amount of the offset ink or varnish.

A combination of two, three or more leuco dyes may be used in a single offset ink or varnish.

Such a combination of leuco dyes may be used to optimize the colour of the laser marked image.

Also, a mixture of leuco dyes may improve the solubility of the leuco dyes in the offset ink or varnish.

### Optothermal converting agent

An optothermal converting agent generates heat upon absorption of radiation. The optothermal converting agent preferably generates heat upon absorption of infrared radiation, more preferably near infrared radiation. Near infrared radiation has a wavelength between 700 and 2500 nm.

The optothermal converting agent is preferably a metal free optothermal converting agent in view of environmentallly and toxicological considerations.

The metal free optothermal converting agent is preferably an infrared radiation absorbing dye (IR dye), an infrared radiation absorbing pigment (IR pigment), or a combination thereof.

Infrared absorbing dyes are preferred for their narrow absorption spectra, compared to pigments, enabling multicolour images to be formed.

### Infrared radiation absorbing (IR) dye

Preferred IR dyes are polymethine dyes due to their low absorption in the visible region and their selectivity, i.e. narrow absorption peak in the infrared region. Particular preferred polymethine IR dyes are cyanine IR dyes.

Preferred IR having an absorption maximum of more than 1100 nm are those disclosed in EP-A 2722367, paragraphs [0044] to [0083] and WO2015/165854, paragraphs [0040] to [0051].

IR dyes having an absorption maximum between 1000 nm and 1100 nm are preferably selected from the group consisting of quinoline dyes, indolenine dyes, especially a benzo[cd]indoline dye. A particularly preferred IR dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)- 2,4,6(1 H,3H,5H)-pyrimidinetrione (CASRN 223717-84-8) represented by the Formula IR-1, or the IR dye represented by Formula IR-2:

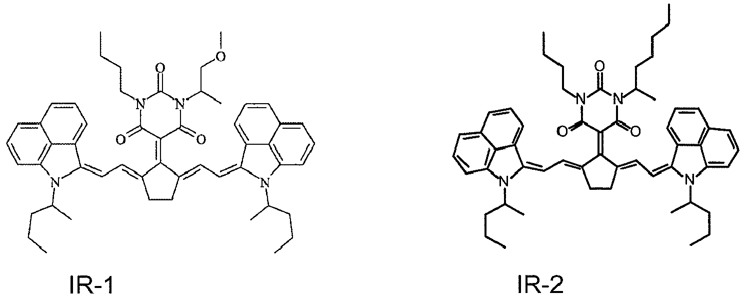

Both IR dyes IR-1 and IR-2 have an absorption maximum λₘₐₓ around 1052 nm making them very suitable for a Nd-YAG laser having an emission wavelength of 1064 nm.

IR dyes having an absorption maximum between 830 nm and 1000 nm are preferably selected from the group consisting of quinoline dyes, indolenine dyes, especially benzo[e]indolenine dyes, and benzo[f]indolenine dyes.

An advantage of using IR dyes is that the absorption spectrum of an IR dye tends to be narrower than that of an IR pigment. This allows the production of multicolour laser markable packaging having a plurality of laser markable layers containing different IR dyes and colour foming compounds. The IR dyes having a different maximum absorption wavelength can then be adressed by IR lasers with corresponding emission wavelengths causing colour formation only in the laser markable layer of the adressed IR dye. Such multicolour articles have been disclosed in for example US 4720449, EP-A 2719540 and EP-A 2719541.

The amount of the IR dyes in the offset ink or varnish is preferably between 0.001 and 5 wt%, more preferably between 0.005 and 1 wt%, most preferably between 0.01 and 0.5 wt %, relative to the total weight of the ink or varnish.

The amount of IR dye in the printed and dried offset ink, varnish or dispersion-lacquer is preferably between 0.01 and 1, more preferably between 0.025 and 0.5 wt % relative to the total dry weight of the offset ink, varnish or dispersion-lacquer. Enough IR dye has to be present to ensure sufficient colour density formation upon exposure to IR radiation. However, using too much IR dye may result in unwanted background colouration of the laser markable materials.

As offset inks or varnishes are typically non-aqueous and apolar, preferred IR dyes are soluble in such non-aqueous and apolar media.

A combination of two, three or more IR dyes may be used in a single offset ink or varnish.

Such a combination of IR dyes may be used to optimize the absorption maxima of the offset inks or varnishes.

Also, a mixture of IR dyes may improve the solubility of the IR dyes in the offset ink or varnish.

It has been observed that after printing a laser markable offset ink or varnish, the IR dye may decompose as function of time. To improve the stability of the IR dyes in such non-aqueous and apolar inks or varnishes, the IR dyes may be added as dispersions. It has been observed that such pigment-like IR dyes typically have an improved stability compared to solubilized IR dyes.

### Infrared radiation absorbing pigments

A preferred IR pigment is carbon black, such as acetylene black, channel black, furnace black, lamp black, and thermal black. This avoids the use of heavy metals in manufacturing colour laser markable materials. Heavy metals are less desirable from an ecology point of view and may also cause problems for persons having a contact allergy based on heavy metals.

Suitable carbon blacks include Special Black 25, Special Black 55, Special Black 250 and Farbruss™ FW2V all available from EVONIK; Monarch™ 1000 and Monarch™ 1300 available from SEPULCHRE; and Conductex™ 975 Ultra Powder available from COLUMBIAN CHEMICALS CO.

The use of carbon black pigments may lead to an undesired background colouring. For example, a too high concentration of carbon black in a laser markable layer in security document having a white background leads to grey security documents. A too low concentration of carbon black slows down the laser marking or requires a higher laser power.

The numeric average particle size of the carbon black particles is preferably between 5 nm and 250 nm, more preferably between 10 nm and 100 nm and most preferably between 30 nm and 60 nm. The average particle size of carbon black particles can be determined with a Brookhaven Instruments Particle Sizer BI90plus based upon the principle of dynamic light scattering. The measurement settings of the BI90plus are: 5 runs at 23°C, angle of 90°, wavelength of 635 nm and graphics = correction function.

For avoiding grey background colouring of security document, carbon black is preferably present in a concentration of less than 0.08 wt%, more preferably present in a concentration of less than 0.05 wt%, and most preferably present in the range 0.01 to 0.03 wt%, all based on the total weight of the laser markable composition.

As mentioned above, the IR dyes disclosed above may also be used as IR pigments, for example cyanine pigment, merocyanine pigment, etc.

### Developing agents

Various electron accepting substances may be used as developing agent in the present invention. Examples thereof include phenolic compounds, organic or inorganic acidic compounds and esters or salts thereof.

Specific examples include bisphenol A; tetrabromobisphenol A; gallic acid; salicylic acid; 3-isopropyl salicylate; 3-cyclohexyl salicylate; 3-5-di-tert-butyl salicylate; 3,5-di-α-methyl benzyl salicylate; 4,4'-isopropylidenediphenol; 1,1'-isopropylidene bis(2-chlorophenol); 4,4'-isopropylene bis(2,6-dibromo-phenol); 4,4'-isopropylidene bis(2,6-dichlorophenol); 4,4'-isopropylidene bis(2-methyl phenol); 4,4'-isopropylidene bis(2,6-dimethyl phenol); 4,4'-isopropylidene bis(2-tert-butyl phenol); 4,4'-sec-butylidene diphenol; 4,4'-cyclohexylidene bisphenol; 4,4'-cyclohexylidene bis(2-methyl phenol); 4-tert-butyl phenol; 4-phenyl phenol; 4-hydroxy diphenoxide; α-naphthol; β-naphthol; 3,5-xylenol; thymol; methyl-4-hydroxybenzoate; 4-hydroxy-acetophenone; novolak phenol resins; 2,2'-thio bis(4,6-dichloro phenol); catechol; resorcin; hydroquinone; pyrogallol; fluoroglycine; fluoroglycine carboxylate; 4-tert-octyl catechol; 2,2'-methylene bis(4-chlorophenol); 2,2'-methylene bis(4-methyl-6-tert-butyl phenol); 2,2'-dihydroxy diphenyl; ethyl p-hydroxybenzoate; propyl p-hydroxybenzoate; butyl p-hydroxy-benzoate; benzyl p-hydroxybenzoate; p-hydroxybenzoate-p-chlorobenzyl; p-hydroxybenzoate-o-chlorobenzyl; p-hydroxybenzoate-p-methylbenzyl; p-hydroxybenzoate-n-octyl; benzoic acid; zinc salicylate; 1-hydroxy-2-naphthoic acid; 2-hydroxy-6-naphthoic acid; 2-hydroxy-6-zinc naphthoate; 4-hydroxy diphenyl sulphone; 4-hydroxy-4'-chloro diphenyl sulfone; bis(4-hydroxy phenyl)sulphide; 2-hydroxy-p-toluic acid; 3,5-di-tert-zinc butyl salicylate; 3,5-di-tert-tin butyl salicylate; tartaric acid; oxalic acid; maleic acid; citric acid; succinic acid; stearic acid; 4-hydroxyphthalic acid; boric acid; thiourea derivatives; 4-hydroxy thiophenol derivatives; bis(4-hydroxyphenyl) acetate; bis(4-hydroxyphenyl)ethyl acetate; bis(4-hydroxyphenyl)acetate-n-propyl; bis(4-hydroxy-phenyl)acetate-n-butyl; bis(4-hydroxyphenyl)phenyl acetate; bis(4-hydroxyphenyl)-benzyl acetate; bis(4-hydroxyphenyl)phenethyl acetate; bis(3-methyl-4-hydroxy-phenyl)acetate; bis(3-methyl-4-hydroxy-phenyl)methyl acetate; bis(3-methyl-4-hydroxyphenyl)acetate-n-propyl; 1,7-bis(4-hydroxyphenylthio)3,5-dioxaheptane; 1,5-bis(4-hydroxy-phenylthio)3-oxaheptane; 4-hydroxy phthalate dimethyl; 4-hydroxy-4'-methoxy diphenyl sulfone; 4-hydroxy-4'-ethoxy diphenyl sulfone; 4-hydroxy-4'-isopropoxy diphenyl sulfone; 4-hydroxy-4'-propoxy diphenyl sulfone; 4-hydroxy-4'-butoxy diphenyl sulfone; 4-hydroxy-4'-isopropoxy diphenyl sulfone; 4-hydroxy-4'-sec-butoxy diphenyl sulfone; 4-hydroxy-4'-tert-butoxy diphenyl sulfone; 4-hydroxy-4'-benzyloxy diphenyl sulfone; 4-hydroxy-4'-phenoxy diphenyl sulfone; 4-hydroxy-4'-(m-methyl benzoxy)diphenyl sulfone; 4-hydroxy-4'-(p-methyl benzoxy)diphenyl sulfone; 4-hydroxy-4'-(o-methyl benzoxy)diphenyl sulfone; 4-hydroxy-4'-(p-chloro benzoxy)diphenyl sulfone and 4-hydroxy-4'-oxyaryl diphenyl sulfone.

A preferred developing agent is a metal salt of salicylate, for example zinc salicylate. A particularly preferred colour developing agent is zinc 3,5-bis(α-methylbenzyl) salicylate.

The developing agent may be present in the continuous phase of the laser markable composition or it may be present in the core of a capsule. However, when the developing agent is not, or slightly, soluble in aqueous media, it is preferred to add such a developing agent as an aqueous dispersion or emulsion.

### Developer agent precursor

The offset ink or varnish preferably comprises a so-called developing agent precursor. Such a precursor forms a developing agent upon exposure to heat.

All publicly-known thermal acid generators can be used as developing agent precursors. Thermal acid generators are for example widely used in conventional photoresist material. For more information see for example "Encyclopaedia of polymer science", 4th edition, Wiley or "Industrial Photoinitiators, A Technical Guide", CRC Press 2010.

Preferred classes of photo- and thermal acid generators are iodonium salts, sulfonium salts, ferrocenium salts, sulfonyl oximes, halomethyl triazines, halomethylarylsulfone, α-haloacetophenones, sulfonate esters, t-butyl esters, allyl substituted phenols, t-butyl carbonates, sulfate esters, phosphate esters and phosphonate esters.

Preferred developing agent precursors have a structure according to Formula (I) or Formula (II): 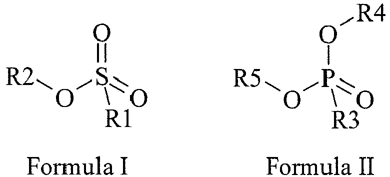 wherein
R1 and R3 independently represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryl group.
R2, R4 and R5 independently represent an optionally substituted alkyl, an optionally substituted aliphatic (hetero)cyclic alkyl group or an optionally substituted aralkyl group;
R1 and R2, R4 and R5, R3 and R4, and R3 and R5 may represent the necessary atoms to form a ring.

Suitable alkyl groups include 1 or more carbon atoms such as for example C₁ to C₂₂-alkyl groups, more preferably C₁ to C₁₂-alkyl groups and most preferably C₁ to C₆-alkyl groups. The alkyl group may be lineair or branched such as for example methyl, ethyl, propyl (n-propyl, isopropyl), butyl (n-butyl, isobutyl, t-butyl), pentyl, 1,1-dimethyl-propyl, 2,2-dimethylpropyl and 2-methyl-butyl, or hexyl.

Suitable cyclic alkyl groups include cyclopentyl, cyclohexyl or adamantyl.

Suitable heterocyclic alkyl groups include tetrahydrofuryl, piperidinyl, pyrrolidinyl, dioxyl, tetrahydrothiophenyl, silolanyl, or thianyl oxanyl.

Suitable aryl groups include for example phenyl, naphthyl, benzyl, tolyl, ortho-meta- or para-xylyl, anthracenyl or phenanthrenyl.

Suitable heteroaryl groups include monocyclic- or polycyclic aromatic rings comprising carbon atoms and one or more heteroatoms in the ring structure. Preferably 1 to 4 heteroatoms independently selected from nitrogen, oxygen, selenium and sulphur and/or combinations thereof. Examples include pyridyl, pyrimidyl, pyrazoyl, triazinyl, imidazolyl, (1,2,3,)- and (1,2,4)-triazolyl, tetrazolyl, furyl, thienyl, isoxazolyl, thiazolyl and carbazoyl.

Suitable alkoxy groups include those containing from 1 to 18, preferably 2 to 8 carbon atoms, such as ethoxide, propoxide, isopropoxide, butoxide, isobutoxide and tert-butoxide.

Suitable aryloxy groups include phenoxy and naphthoxy.

The alkyl, (hetero)cyclic alkyl, aralkyl, (hetero)aryl, alkoxy, (hetero)cyclic alkoxy, or (hetero)aryloxy groups may include one or more substituents. The optional substituents are preferably selected from an alkyl group such as a methyl, ethyl, n-propyl, isopropyl, n-butyl, 1-isobutyl, 2-isobutyl and tertiary-butyl group; an ester, amide, ether, thioether, ketone, aldehyde, sulfoxide, sulfone, sulfonate ester or sulfonamide group, a halogen such as fluorine, chlorine, bromine or iodine, -OH, -SH, -CN and -NO₂, and/or combinations thereof.

R1 preferably represents a C₁ to C₂₂-alkyl group, an aliphatic alkoxide group containing 2 to 8 carbons, a phenyl group or a tolyl group. R1 most preferably represents a tolyl group.

R2 preferably represents a C₁ to C₂₂-alkyl group or a (hetero)cyclic alkyl group. R2 most preferably represents a cyclohexyl group.

R3 preferably represents a C₁ to C₂₂-alkyl group, an aliphatic alkoxide group containing 2 to 8 carbons or a benzyl group.

In a preferred embodiment, R4 and R5 independently represent a C₁ to C₂₂-alkyl group. In a preferred embodiment, R4 and R5 represent independently an isobutyl, t-butyl, isopropyl, 2-ethylhexyl or a linear C₂ to C₈-alkyl group.

The compound used in the present invention can be a monomer, an oligomer (i.e. a structure including a limited amount of monomers such as two, three or four repeating units) or a polymer (i.e. a structure including more than four repeating units).

The compound used in the present invention contains at least one moiety according to Formula I and/or Formula II, preferably 1 to 150 moieties according to Formula I and/or Formula II. According to a preferred embodiment, the compound according to Formula I or Formula II may be present in a side chain of a polymer

In the embodiment wherein the compound according to Formula I or Formula II is present in the side chain of a polymer, the following moiety (Formula III, IV or V) is preferably attached to the polymer: 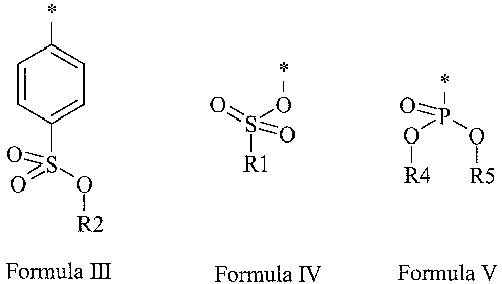 wherein
* denotes the linking to the polymer and
R1, R2, R4 and R5 as described above.

In the embodiment wherein the compound according to Formula I is present in the side chain of a polymer, the polymer is more preferably obtained from the coupling of a polymer or copolymer bearing side chains with alcohol groups and a sulfonyl chloride.

In the embodiment wherein the compound according to Formula I is present in the side chain of a polymer, the polymer is most preferably obtained from the coupling of a polymer or copolymer bearing side chains with alcohol groups and tosyl chloride. Useful polymers bearing side chains with alcohol include for example polyvinyl alcohol, polyvinyl butyral, cellulose derivatives, homo- and copolymers of 2-hydroxyethyl methacrylate, 2-hydroxyethyl acrylate, polysiloxane derivatives such as copolymers of hydroxyalkyl-methylsiloxane, and novolac resins.

Examples of acid generating compounds according to the present invention are shown in Table 2.

**Table 2**

| |
|---|
| 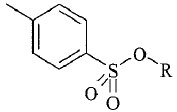 |
| wherein R represents an alkyl group. |
| 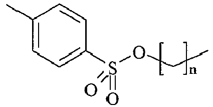 |
| with n = 1-50 |
| 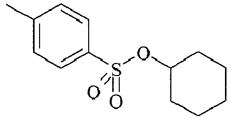 |
| 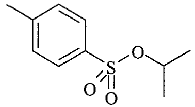 |
| 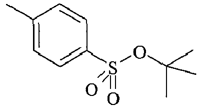 |
| 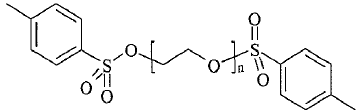 |
| with n = 1-10000 |
| 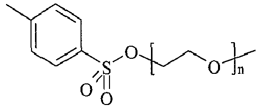 |
| with n = 1-10000 |
| 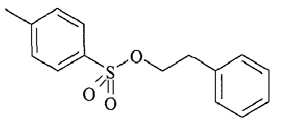 |
| 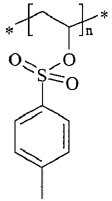 |
| with n = 1-10000 and copolymers thereof |
| 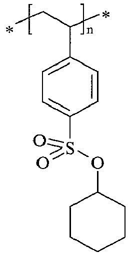 |
| with n = 1-10000 and copolymers thereof |
| 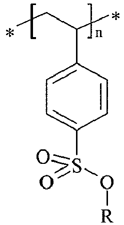 |
| with n = 1-10000 and copolymers thereof and R represents an alkyl group, preferably a tertiary butyl group |
| 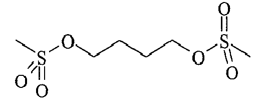 |
| 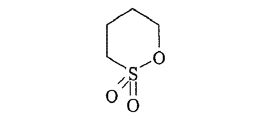 |
| 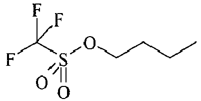 |
| 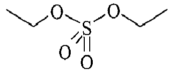 |
| 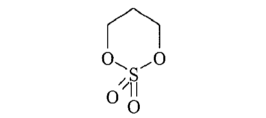 |
| 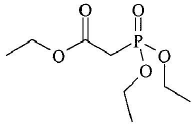 |
| 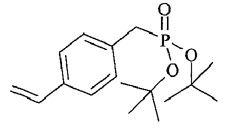 |
| 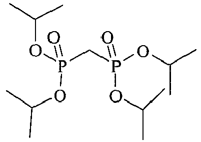 |
| 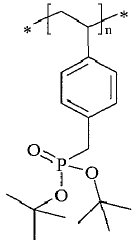 |
| with n = 1-10000 and copolymers thereof |
| 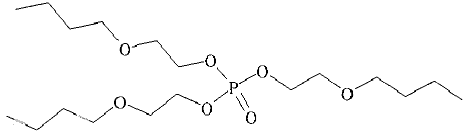 |
| 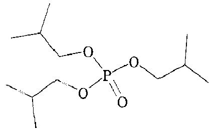 |
| 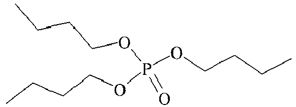 |
| 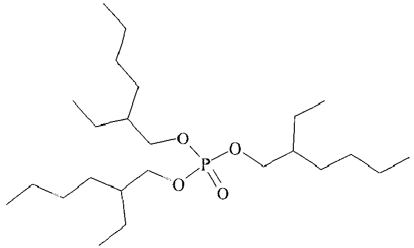 |
| 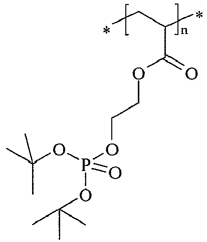 |
| with n = 1-10000 and copolymers thereof |

The amount of developing agent precursor in the offset ink or varnish is preferably between 0.1 and 25 wt%, more preferably between 1 and 20 wt%, most preferably between 2.5 and 10 wt%, relative to the total weight of the offset ink or varnish.

### Acid Scavenger

The Offset ink or varnish may contain one or more acid scavengers.

Acid scavengers include organic or inorganic bases.

Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals.

Examples of the organic bases include aliphatic amines (e.g., trialkylamines, hydroxylamines and aliphatic polyamines); aromatic amines (e.g., N-alkyl-substituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavangers are HALS compounds. Example of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### UV absorbers

The offset ink or varnish may also comprise an UV-absorber. The UV-absorber is however preferably present in a protective layer, provided on top of the printed laser markable image.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™^{,} Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### Laser Marking

Laser marking is preferably carried out using an infrared laser.

The infrared laser may be a continuous wave or a pulsed laser.

A preferred infrared laser is a CO₂ laser. A CO₂ laser is a continuous wave, high power laser having an emission wavelength of typically 10600 nm (10.6 micrometer).

An advantage of using a carbon dioxide (CO₂) laser is the fact that laser markable sub-pixels without an optothermal converting agent may be used. This may result in an improved background colour as optothermal converting agents may give rise to unwanted colouration of the background.

A disadvantage of using a carbon dioxide (CO₂) laser is the rather long emission wavelength limiting the resolution of the marked image that can obtained.

Another preferred continuous wave laser is an optical pumped semiconductor laser. Optically pumped semiconductor lasers have the advantage of unique wavelength flexibility, different from any other solid-state based laser. The output wavelength can be set anywhere between 920 nm and 1200 nm. This allows a perfect match between the laser emission wavelength and the absorption maximum of an optothermal converting agent.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

The advantage of using a near infrared (NIR) laser, i.e. having a wavelength between 800 and 1200 is the higher resolution that can be obtained, compared to the CO₂ laser described above.

When two or more lasers are used to laser mark two or more laser markable composition , the difference of the emission wavelengths of the two or more infrared laser is preferably at least 100 nm, more preferably at least 150 nm, most preferably at least 200 nm.

Laser marking may be carried in line in the packaging process, for example to include batch numbers, expiry dates, bar codes or QR codes.

However, especially for customization or personalisation purposes it is preferred to laser mark the packaging at a later point of time for example shortly before it is shipped to the customer, for example when purchased online.

Laser marking may also be carried out at the retailer, for example to add personal information of the customer to the packaging.

### Security Features

The printing process may also be used to form security features on a packaging.

The laser markable offset inks or varnishes may be applied on the packaging thereby forming an "invisible" image. This "invisible" image can then be used as a security feature whereby the presence of the image may be verified by exposing the image to heat whereby the invisible image becomes visible.

Such "invisible" images may be combined with other visible images.

### QR codes

The method according to the present invention may be used to prepare so called QR code on the packaging.

QR code (abbreviated from Quick Response Code) is the trademark for a type of matrix barcode (or two-dimensional barcode) first designed for the automotive industry in Japan. A barcode is a machine-readable optical label that contains information about the item to which it is attached. The QR Code system became popular outside the automotive industry due to its fast readability and greater storage capacity compared to standard UPC barcodes.

Applications include product tracking, item identification, time tracking, document management, and general marketing.

A QR code consists of black modules (square dots) arranged in a square grid on a white background, which can be read by an imaging device (such as a camera, scanner, etc.) and processed using Reed-Solomon error correction until the image can be appropriately interpreted. The required data are then extracted from patterns that are present in both horizontal and vertical components of the image.

The QR codes are typically applied on a packaging by a printing method, for example inkjet printing or by laser marking with a CO₂ laser. A CO₂ laser has an emission wavelength of 10600 nm.

In the method according to the present wherein a laser markable composition comprising an optothermal converting agent, an infrared laser having an emission wavelength between 800 and 1200 nm may be used.

The much smaller emission wavelenght of such lasers compared to a CO₂ laser ensures a higher resolution of the laser marked QR code. Such a high resolution may improve the quality (i.e. readiblity) of the QR code or makes it possible to minimize the QR.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Developer precursor-1** is a thermo-acid having the following structure: 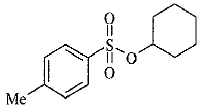 Developer precursor-1 was supplied by Aldrich and residual p-toluene sulfonic acid was removed using the following procedure. 1657 g cyclohexyl tosylate was dissolved in 6 litre methylene chloride. 6 I water was added and the mixture was stirred. The pH of the aqueous phase was adjusted to pH 8 using sodium bicarbonate. The mixture was allowed to separate and the methylene chloride fraction was isolated. The methylene chloride fraction was dried over MgSO₄ and evaporated under reduced pressure. A white crystalline residue was isolated.

**IR-dye** 1 is an infrared dye having the following structure: 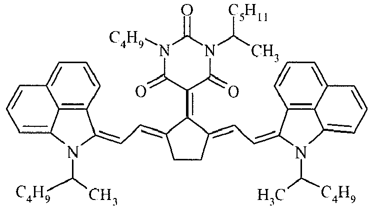 IR-dye 1 was prepared according to the synthetic methodology disclosed in paragraphs [0150] to [0159] of EP2463109 (Agfa).

**Basic varnish-1** is Novacoat 4050 High Gloss Varnish supplied by Flint Group.

**Basic ink-1** is NOVAVIT 1 F 700 Speed plus (yellow) supplied by Flint Group.

### The synthesis of leuco-magenta mix -1

### The synthesis of 2-(1-butyl-2-methyl-1H-indole-3-carbonyl)-benzoic acid

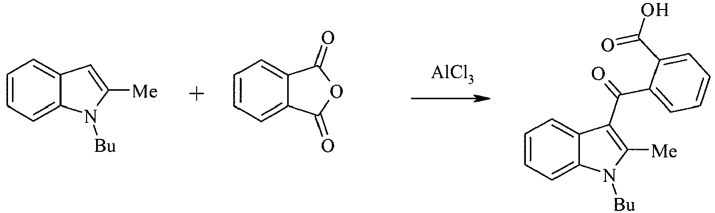

33.71 g (0.18 mol) 1-butyl-2-methyl-indole and 22.22 g (0.15 mol) phtalic anhydride were added to 100 ml methylene chloride. The reaction mixture was cooled to 0°C and 40 g (0.3 mol) aluminium trichloride was added portionwise while maintaining the temperature below 5°C. The reaction was allowed to continue at room temperature for 16 hours. The reaction mixture was added slowly to 250 ml ice/water while keeping the temperature below 15°C. The methylene chloride fraction was isolated, dried over MgSO₄ and evaporated under reduced pressure. The residue was crystallized from a methylene chloride/hexane mixture. The crystallized 2-(1-butyl-2-methyl-1 H-indole-3-carbonyl)-benzoic acid was isolated by filtration and dried.... g of 2-(1-butyl-2-methyl-1 H-indole-3-carbonyl)-benzoic acid was isolated and used without further purification (TLC analysis on Reveleris™ RP C18 plates , supplied by Grace: R_{f}: 0.65, eluent: MeOH/ 1 M NaCl 90/10).

### The synthesis of 2-(2-methyl-indol-1-yl)-hexanoic acid methyl ester

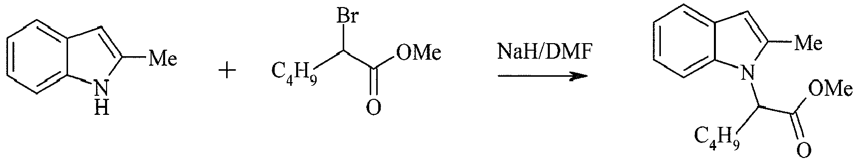

6.6 g (50 mmol) 2-methylindole was dissolved in 80 ml dimethyl formamide. 3.2 g sodium hydride (60% in mineral oil, 80 mmol) was added portionwise, while the temperature was kept below 30°C. The mixture was stirred for an additional 15 minutes. 12.5 g (60 mmol) methyl-2-bromohexanoate was added dropwise and the reaction was allowed to continue for 2 hours at room temperature. The reaction mixture was added to 500 ml ice/water and extracted with 250 ml methylene chloride, after addition of 50 ml of a 25 w% sodium chloride solution. The methylene chloride fraction was washed with 200 ml of a 12.5 w% sodium chloride solution , dried over MgSO₄ and evaporated under reduced pressure. 10.7 g of the crude 2-(2-methyl-indol-1-yl)-hexanoic acid methyl ester was isolated and purified using preparative column chromatography on a Grace Resolve column, using a gradient elution from hexane to hexane/ethyl acetate 96/4. 3.44 g of 2-(2-methyl-indol-1-yl)-hexanoic acid methyl ester was isolated (TLC analysis on Silica gel 60 F₂₅₄, supplied by Merck: R_{f} : 0.25 , eluent: hexane/ethyl acetate 90/10).

### The synthesis of 2-(2-methyl-indol-1-yl)-myristic acid methyl ester

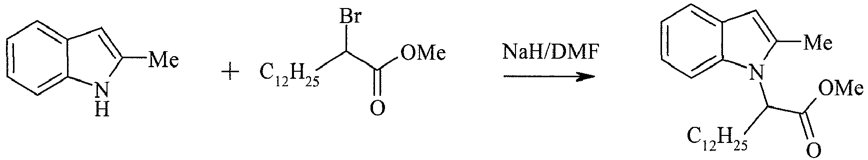

13.12 g (0.1 mol) 2-methyl-indole was dissolved in 60 ml dimethyl formamide. 3.84 g sodium hydride (60% in mineral oil, 0.096 mol) was added portionwise, while the temperature was kept below 30°C. The reaction mixture was stirred for an additional 15 minutes at romm temperature. A solution of 38.56 g (0.12 mol) 2-bromo-myristic acid methyl ester in 10 ml dimethyl formamide was added over 25 minutes. The temperature rose to 60°C. The reaction mixture was allowed to cool down to room temperature and the reaction was allowed to continue for 16 hours at room temperature. The formed sodium bromide was removed by filtration. 250 ml water was added to the reaction mixture and the mixture was extracted with 300 ml methylene chloride. The methylene chloride fraction was washed twice with 200 ml water, dried over MgSO₄ and evaporated under reduced pressure. The crude 2-(2-methyl-indol-1-yl)-myristic acid methyl ester was purified by preparative column chromatography on a Grace Resolve column, using a gradient elution from hexane to hexane/ethyl acetate 96/4. 5.39 g of 2-(2-methyl-indol-1-yl)-myristic acid methyl ester was isolated (TLC analysis on Silica gel 60 F₂₅₄, supplied by Merck R_{f} : 0.39 , eluent: hexane/ethyl acetate 90/10).

### The synthesis of 1-(2-ethyl-hexyl)-2-methyl-1 H-indole

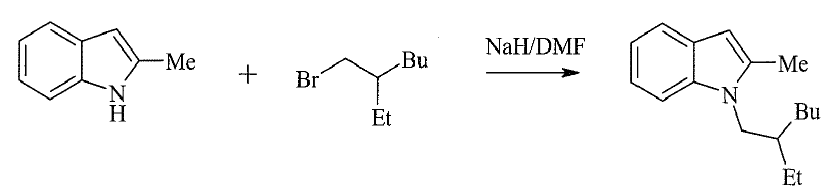

6.6 g (50 mmol) of 2-methyl-indole was dissolved in 80 ml dimethyl formamide. 3.2 g sodium hydride (60% in mineral oil, 80 mmol) was added portionwise, while the temperature was kept below 30°C. The mixture was stirred for an additional 15 minutes. 11.6 g (60 mmol) 2-ethyl-1-hexylbromide was added dropwise over10 minutes. The reaction was allowed to continue for 2 hours at room temperature. The reaction mixture was added to 500 ml ice/water and extracted 200 ml tert.butyl-methyl-ether. The organic fraction was washed with 200 ml water, dried over MgSO₄ and evaporated under reduced pressure. 9.0 g of the crude 1-(2-ethyl-hexyl)-2-methyl-1H-indole was isolated and purified by preparative column chromatography on a Grace Resolve column, using a gradient elution from hexane to hexane/ethyl acetate 96/4. 3.8 g of 1-(2-ethyl-hexyl)-2-methyl-1H-indole was isolated (TLC analysis on Silica gel 60 F₂₅₄, supplied by Merck: R_{f}: 0.14 , eluent: hexane/ethyl acetate 90/10).

### The synthesis of leuco-magenta mix-1

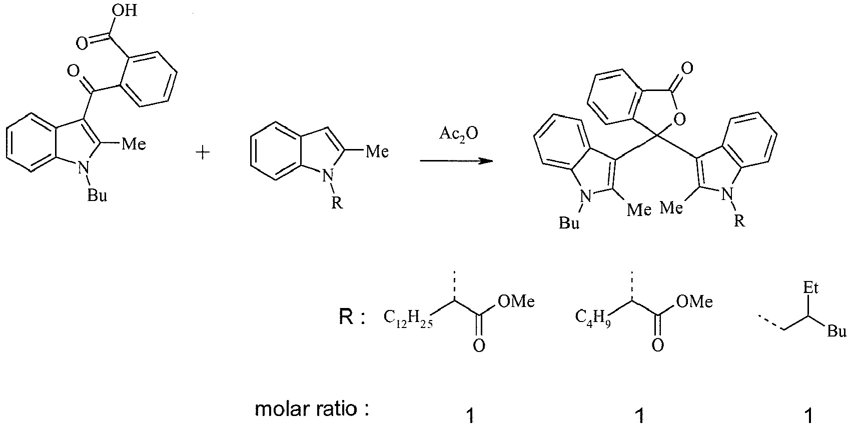

2.012 g (6 mmol) 2-(1-butyl-2-methyl-1H-indole-3-carbonyl)-benzoic acid, 0.742 g (2 mmol) 2-(2-methyl-indol-1-yl)-myristic acid methyl ester, 0.519 g (2 mmol) 2-(2-methyl-indol-1-yl)-hexanoic acid methyl ester and 0.473 (2 mmol) 1-(2-ethyl-hexyl)-2-methyl-1 H-indole were suspended in 3.675 g (36 mmol) acetic anhydride. The mixture was heated to 60°C and the reaction was allowed to continue for one hour at 60°C. The mixture was allowed to cool down to room temperature. The mixture was added to 25 ml of a ... ammonia solution. The mixture was stirred for half an hour and leuco-magenta mix-1 precipitated from the medium. The crude leuco-magenta mix-1 was isolated by filtration and dried. Leuco-magenta mix-1 was purified using preparative column chromatography on a Grace resolve column, using hexane/ethylacetate 80/20 as eluent. The compounds having an R_{f} of 0.28, 0.19 and 0.14 (Silica gel 60 F₂₅₄ supplied by Merck, eluent hexane/ethyl acetate 80/20) were isolated an pooled. 2.35 g of leuco-magenta mix-1 was isolated.

### Laser markable varnish-1

A laser markable varnish was formulated, having a composition according to Table 3. All percentages are weight percentages of the total offset varnish composition.

**Table 3**

| wt% of component | Varnish-1 |
|---|---|
| IR-dye 1 | 0.1 |
| Leuco-magenta mix-1 | 4.7 |
| Developer precursor-1 | 12.0 |
| Basic varnish-1 | 83.2 |

Laser markable varnish-1 was formulated according to the following procedure. IR-dye 1 was dissolved in 100 ml methylene chloride per gram infrared dye. Leuco-magenta mix-1 and developer precursor-1 were dissolved in 5.8 ml toluene per gram mixture. Both solutions were added to Basic varnish-1 and the mixture was homogenized. The solvents were removed under reduced pressure, yielding laser markable varnish-1.

A 4 micron thick coating of laser markable varnish-1 was applied on Synaps OM135, commercially available by Agfa and dried. An optically pumped semiconductor laser emitting at 1064 nm (Genesis MX 1064-10000 MTM from COHERENT) was used for producing a magenta wedge of 0.6 cm x 0.6 cm square boxes of increasing optical density in the laser markable layer. The laser was used at a power level of 4 W measured at the sample, a dither of 0.025, a scan speed of 200 mm/s and at a pulse repetition rate of 10 kHz.

A clear magenta colour sensitometry was written into the applied varnish, illustrating the laser markability of the varnish.

### Laser markable ink-1

A laser markable ink was formulated, having a composition according to Table 4 All percentages are weight percentages of the total offset varnish composition.

**Table 4**

| wt% of component | Ink-1 |
|---|---|
| IR-dye 1 | 0.1 |
| Leuco-magenta mix-1 | 3.4 |
| Developer precursor-1 | 8.8 |
| Basic ink-1 | 87.7 |

Laser markable ink-1 was formulated according to the following procedure. IR-dye 1 was dissolved in 100 ml methylene chloride per gram infrared dye. Leuco-magenta mix-1 and developer precursor-1 were dissolved in 5.8 ml toluene per gram mixture. Both solutions were added to Basic ink-1 and the mixture was homogenized. The solvents were removed under reduced pressure, yielding laser markable ink-1.

A 4 micron thick coating of laser markable ink-1 was applied on Synaps OM135, commercially available by Agfa and dried. An optically pumped semiconductor laser emitting at 1064 nm (Genesis MX 1064-10000 MTM from COHERENT) was used for producing a wedge of 0.6 cm x 0.6 cm square boxes of increasing optical density in the laser markable layer. The laser was used at a power level of 4 W measured at the sample, a dither of 0.025, a scan speed of 200 mm/s and at a pulse repetition rate of 10 kHz.

A clear red coloured sensitometry was written into the applied yellow offset ink, illustrating the laser markability of the ink.

## Claims

1. A laser markable offset ink, offset varnish or offset dispersion-lacquer comprising a leuco dye and a metal free optothermal converting agent.

2. The laser markable offset ink, offset varnish or offset dispersion-lacquer according to claim 1 wherein the optothermal converting agent is a cyanine infrared radiation absorbing dye.

3. The laser markable offset ink, offset varnish or offset dispersion-lacquer according to claim 1 or 2 further comprising a developing agent precursor.

4. The laser markable offset ink, offset varnish or offset dispersion-lacquer according to claim 3 wherein the developing agent precursor has a structure according to Formulae I or II, 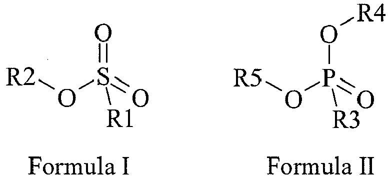 wherein
R1 and R3 independently represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryl group.
R2, R4 and R5 independently represent an optionally substituted alkyl, an optionally substituted aliphatic (hetero)cyclic alkyl group or an optionally substituted aralkyl group;
R1 and R2, R4 and R5, R3 and R4, and R3 and R5 may represent the necessary atoms to form a ring.

5. The laser markable dispersion-lacquer according to any one of the preceding claims wherein the leuco dye and optionally the metal free optothermal converting agent are encapsulated.

6. The laser markable offset ink or varnish according to any one of the claims 1 to 5 wherein the leuco dye comprises a structural element according to Formulae I or II, 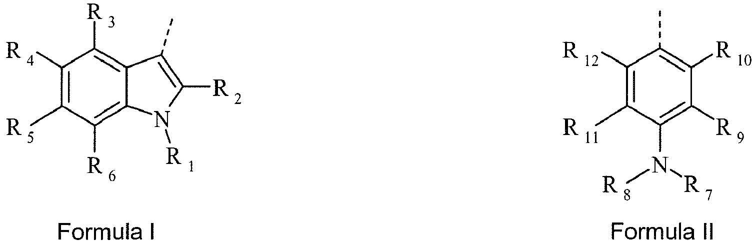 wherein
R₁ represents an optionally substituted branched alkyl group,
R₂ represents a group selected from the group consisting of an alkyl group and an aryl group,
R₃ to R₆ are independently selected from the group consisting of hydrogen, an optionally substituted alkyl group, an optionally substituted alkenyl group, an optionally substituted alkynyl group, an optionally substituted alkaryl group, an optionally substituted aralkyl group, an optionally substituted aryl or heteroaryl group, a halogen, an amine, an amide, an ester, an optionally substituted alkoxy group, an optionally substituted aryloxy group, an optionally substituted thioalkoxy group and an optionally substituted thioaryloxy group,
R₇ and R₈ represent an optionally substituted alkyl group, an optionally substituted alkenyl group, an optionally substituted alkynyl group, an optionally substituted aralkyl group, an optionally substituted alkaryl group and an optionally substituted aryl or heteroaryl group, with the proviso that at least one of R₇ and R₈ represents an optionally substituted branched alkyl group,
R₉ to R₁₂ are independently selected from the group consisting of hydrogen, an optionally substituted alkyl group, an optionally substituted alkenyl group, an optionally substituted alkynyl group, an optionally substituted alkaryl group, an optionally substituted aralkyl group, an optionally substituted aryl or heteroaryl group, a halogen, an amine, an amide, an ester, an optionally substituted alkoxy group, an optionally substituted aryloxy group, an optionally substituted thioalkoxy group and an optionally substituted thioaryloxy group, and wherein the dashed line represents the coupling position to the rest of the chromophore.

7. The laser markable offset ink or varnish according to claim 6 comprising at least two different leuco dyes.

8. An offset printing process for manufacturing a laser markable packaging **characterized in that** a laser markable offset ink, a laser markable varnish or a laser markable dispersion-lacquer is used in the process to provide a laser markable image or area on the packaging.

9. The process according to claim 8 wherein a laser markable offset ink, offset varnish or offset dispersion-lacquer as defined in any one of the claims 1 to 7 is used.

10. The process according to claim 8 or 9 wherein at least two different laser markable offset inks, offset varnish or offset dispersion-lacquers, each comprising a different leuco dye, are used.

11. The process according to any one of the claims 8 to 10 wherein a protective layer is applied on top of the laser markable image or area.

12. A method of laser marking a packaging comprising the steps of:
- providing a packaging comprising a laser markable image or area obtained by the offset printing process as defined in any one of the claim 8 to 11; and
- exposing the laser markable image or area with an infrared laser to obtain a laser marked image.

13. The method according to claim 12 wherein the infrared laser is a near infrared laser.

14. The method according to claim 12 or 13 wherein the laser marked image is used for serialization and authentication purposes.

15. The method according to any one of the claims 12 to 14 wherein the laser marked image is a QR code.
